# EUROPÄISCHE PATENTSCHRIFT

(11) **EP 1 289 190 B1**
(45) Veröffentlichungstag und Bekanntmachung des Hinweises auf die Patenterteilung: **06.06.2007**
(21) Anmeldenummer: 02019259.7
(22) Anmeldetag: 28.08.2002
(51) Int. Cl.: H04L 12/24

(54) **Automatisierte Buskonfiguration**
Automatic BUS configuration
Configuration automatique d' un BUS

(30) Priorität: 31.08.2001 DE 10142810
(43) Veröffentlichungstag der Anmeldung: 05.03.2003
(73) Patentinhaber: AUDI AG, 85045 Ingolstadt (DE)
(72) Erfinder: Kischkat, Ralf, Dr., 85057 Ingolstadt (DE)
(74) Vertreter: Thielmann, Frank

(56) Entgegenhaltungen:
- WO-A-98/57239
- J. CASE, M. FEDOR, M. SCHOFFSTALL, J. DAVIN: "A Simple Network Management Protocol (SNMP)" REQUEST FOR COMMENTS: NETWORK WORKING GROUP, Mai 1990 (1990-05), Seiten 1-36, XP015006099

## Beschreibung

Die vorliegende Erfindung betrifft eine Netzkomponente, ein Bussystem mit mindestens zwei erfindungsgemäßen Netzkomponenten, ein Verfahren zur automatisierten Buskonfiguration sowie ein Kraftfahrzeug mit einem erfindungsgemäßen Bussystem.

In Systemen, in denen eine Vielzahl von Informationen zwischen verschiedenen Komponenten, wie beispielsweise Sensoren, Steuergeräten und Aktoren, in rascher Folge und hoher Informationsdichte ausgetauscht werden müssen, werden heutzutage oftmals Bussysteme verwendet, über die den einzelnen Komponenten die Vielzahl an einzelnen Informationen in der benötigten Geschwindigkeit und Qualität zur Verfügung gestellt werden können.

Das Bussystem selbst besteht dabei aus einer begrenzten Anzahl physikalischer Verbindungsleitungen. Die Art und Weise des Informationsaustausches wird durch das jeweils verwendete Busprotokoll festgelegt. Im Bereich des Kraftfahrzeubaus haben sich gegenwärtig beispielsweise die Protokolle CAN (Controller Area Network), MOST (Media Oriented Systems Transport) und neuerdings TTP (Time Triggered Protocol) etabliert.

Ein Bussystem funktioniert in der Regel derart, dass eine Netzkomponente nur zeitlich begrenzt auf die gemeinsamen Verbindungsleitungen des Bussystems zugreift. Die übrige Zeit haben dann die übrigen Netzkomponenten ihre Informationen zu senden. Während des nicht sendenden Betriebs ist die Netzkomponente im Empfangsmodus.

Nach dem Stand der Technik ist es notwendig, während der Konstruktionsphase eines Systems, in dem ein Bussystem zum Einsatz kommen soll, nicht nur das Protokoll an sich, sondern auch das Zeitraster sowie die Art und Position der gesendeten Information für jede Netzkomponente festzulegen. Hierfür gibt es in den Unternehmen Arbeitsgruppen, die dies in einer Art parlamentarischem Prozess leisten.

Diese Festlegungen werden umso komplexer und komplizierter, umso mehr Netzkomponenten in einem System vorhanden sind bzw. in unterschiedlichen Variationen des Systems vorhanden sein können. So geht beispielsweise das zunehmende Komfortbewusstsein von Käufern von Kraftfahrzeugen mit einer zunehmenden Anzahl an Komponenten in den Kraftfahrzeugen einher. Auch steigt die Zahl möglicher Fahrzeugvarianten immer weiter, Sonderausstattungen lassen sich entsprechend der Kundenwünsche beliebig untereinander kombinieren

Mit jeder Komponente steigt die Anzahl der verfügbaren Informationen im System, die zunächst nur lokal der Komponente zur Verfügung steht. Dort wird z.B. die Sensorik, sowie die Ressourcen zur Auswertung (z.B. Rechenleistung, Speicher) zur Verfügung gestellt. Dies kostet Geld, Bauraum und Gewicht.

Soll zusätzliche Funktionalität zur Verfügung gestellt werden, müssen die dafür erforderlichen Informationen über ein oder mehrere Bussysteme bereitgestellt werden (Stichwort: vernetzte Funktionen). Dies führt zu einer stark steigender Zahl auszutauschender Informationen, was nicht nur zu einer stark und ständig steigenden Buslast führt, sondern auch in zunehmenden Maße die Arbeitsgruppen überfordert, die die Festlegungen für die Bussysteme treffen. Zudem werden durch diesen Prozess wertvolle Personalressourcen gebunden.

Aufgrund des hohen organisatorischen Aufwands wird die Busfestlegung beispielsweise im Kraftfahrzeugbau immer für eine Maximalkonfiguration eines Systems ausgelegt, auch wenn diese in der Praxis gar nicht vorkommen kann, weil dann z.B. unterschiedliche Getriebevarianten in ein und dasselbe Fahrzeug verbaut werden müssten (z.B. Doppelkupplungsgetriebe, CVT etc.). Da unterschiedliche Systeme teilweise auch unterschiedliche Informationen benötigen, wird oftmals ein Teil der auf dem Bus gesendeten Informationen gar nicht benötigt und erhöht nur unnötig die Buslast. Auch erfordern unterschiedliche Ausstattungsvarianten teilweise unterschiedliche Abläufe in den Komponenten. Diese werden per Softwareschalter (Codierung) in der Produktion und im Kundendienst geschaltet. Auch dies erfordert in Produktion und Kundendienst einen erhöhten Aufwand und ist zudem fehlerbehaftet.

Um die Buskonfigurierung zu vereinfachen, sind aus dem Stand der Technik einige Lösungsansätze bekannt. So beschreibt die DE 199 26 206 ein Fahrzeugelektrik-Konfigurationssystem mit einem zentralen Istkonfigurationsdatenspeicher, in dem die Daten einer Istkonfiguration abrufbar abgespeichert werden können. Über entsprechende Schnittstellen ist es möglich, die Istkonfiguration auszulesen und beispielsweise mit einer Sollkonfiguration zu vergleichen. Da der Istkonfigurationsdatenspeicher direkt oder indirekt mit den verbauten Hardware-Komponenten verbunden ist, kann eine Abfrage der verbauten bzw. der sich meldenden Komponenten vorgenommen werden. Bei Ersatz oder Hinzufügung einer Komponente kann auf diese Weise wieder die (geänderte) Istkonfiguration ermittelt werden. Über eine Wissensbasis, z.B. in Form einer entsprechenden Datenbank, ist es möglich, für die (geänderte) Istkonfiguration eine geeignete Buskonfiguration auszuwählen und zu konfigurieren.

Aus der DE 299 07 265 ist weiter ein Datenübertragungssystem mit einer Konfigurationssteuereinrichtung bekannt, das mehrere über einen Bus verbundene Funktionseinheiten aufweist, die ein Adressregister umfassen, das von der Konfigurationssteuereinrichtung beschreibbar ist. Die Konfigurationssteuereinrichtung ist in der Lage, in die Adressregister der Funktionseinheiten individuelle Adressangaben zu schreiben und so ein fehlerfreies Adressieren der einzelnen Funktionseinheiten zu gewährleisten.

Die Lösung gemäß der DE 199 26 206 erleichtert zwar die Auswahl einer geeigneten Buskonfiguration, die möglichen Buskonfigurationen müssen aber jeweils bereits in einer Wissensbasis vorhanden sein, die vorher aufwendig erarbeitet werden muss.

Die DE 299 07 265 nimmt sich des Problems der korrekten Adressierung der einzelnen Komponenten in einem Bussystem an, ohne darüber hinaus die eigentliche Buskonfiguration (u.a. Protokoll, Zeitraster, Buslast) zu erleichtern.

Die WO 98/57239 A beschreibt ein Kontrollsystem mit mehreren als Netzkomponenten ausgebildeten Installationseinrichtungen, wie beispielsweise Lichtschaltern, Lampen, Wärmefühlern und Wärmeaustauschern. Die Installationseinrichtungen sind über eine Busverbindungsleitung miteinander verbunden und weisen jeweils eine Kommunikationseinheit auf, mithilfe der sie über die Busverbindungsleitung Anfragen oder Informationen senden oder empfangen können. Auf diese Weise können Anfragen oder Informationen bezüglich einer Identifizierung einer Installationseinrichtung oder bezüglich der von einer Installationseinrichtung bereitstellbaren oder benötigten Daten weitergeleitet werden.

Der Artikel "A Simple Network Management Protocol (SNMP)" (J. Case, M. Fedor, M. Schoffstall, J. Davin; Request For Comments: Network Working Group, 1990- 5, S. 1- 36, XP 015006099) betrifft die Administration von Netzelementen innerhalb eines Kommunikationsnetzes.

Aufgabe der vorliegenden Erfindung ist es, eine Möglichkeit zum Selbstkonfigurieren eines Bussystems mit einem komplexen Datentransfer bereitzustellen.

Gelöst wird diese Aufgabe durch eine Netzkomponente nach Anspruch 1, durch ein Bussystem nach Anspruch 3, ein Verfahren zum automatischen Konfigurieren eines Bussystems nach Anspruch 6 sowie durch ein Kraftfahrzeug nach Anspruch 17.

Die erfindungsgemäße Netzkomponente ist dadurch gekennzeichnet, dass die Sendeeinrichtung dazu ausgelegt ist, eine Information zu senden über eine Art einer Bereitstellung der Aktualdaten auf der Busverbindungsleitung und/oder die Empfangeinrichtung dazu ausgelegt ist, die Information über die Art der Bereitstellung der Aktualdaten auf der Busverbindungsleitung zu empfangen und auszuwerten.

Das erfindungsgemäße Bussystem enthält mindestens zwei erfindungsgemäße Netzkomponenten und mindestens eine Busverbindungsleitung, über die die Netzkomponenten miteinander verbunden sind.

Das erfindungsgemäße Verfahren zum automatischen Konfigurieren eines Bussystems ist dadurch gekennzeichnet, dass mindesten eine Netzkomponente eine Anfrage bezüglich einer Art einer Bereitstellung von Aktualdaten auf der Busverbindungsleitung an mindestens eine andere Netzkomponente sendet, und die mindestens eine besendete Netzkomponente eine Konfigurationsantwort mit einer Information über die Art der Bereitstellung der Aktualdaten auf der Busverbindungsleitung an die anfordernde Netzkomponente sendet.

Selbstverständlich kann erfindungsgemäß eine Netzkomponente sowohl die Funktion einer anfordernden wie auch einer besendeten Netzkomponente in sich vereinigen und so gleichzeitig als anfordernde und besendete Netzkomponente fungieren. Eine derartige Netzkomponente kann im Betriebszustand einerseits Informationen über den Bus senden, andererseits für den eigenen Betrieb Informationen aus dem Bus benötigen.

Das erfindungsgemäße Kraftfahrzeug weist ein erfindungsgemäßes Bussystem auf.

Vorteilhafte Weiterbildungen der Erfindung sind Gegenstand der Unteransprüche.

Der Begriff Kraftfahrzeug ist hier nur der Einfachheit halber gewählt, soll aber jedenfalls alle Fortbewegungsmittel umfassen, die eine Antriebsquelle enthalten. Im Sinne dieser Beschreibung sind daher unter einem Kraftfahrzeug neben Kraftfahrzeugen im eigentlichen Sinne jedenfalls auch z.B. schienengebundene Fahrzeuge, Wasserfahrzeuge, Luft- und Raumfahrzeuge zu verstehen. Selbstverständlich ist die vorliegende Erfindung auch in Systemen anwendbar, die über keine eigene Antriebsquelle verfügen, wie beispielsweise Segelflugzeuge.

Entsprechend einer vorteilhaften Weiterbildung enthält die erfindungsgemä-ße Netzkomponente eine interne oder externe Speichereinrichtung zum Abspeichern von Konfigurationsdaten.

Das erfindungsgemäße Bussystem enthält gemäß einer vorteilhaften Weiterbildung eine Starteinrichtung, welche dazu ausgelegt ist, ein Startsignal an die mindestens zwei Netzkomponenten auszugeben, wobei die mindestens zwei Netzkomponenten dazu ausgelegt sind, nach einem Empfang des Startsignals die Konfiguration des Bussystems über die mindestens eine Busverbindungsleitung zu beginnen.

Gemäß einer weiteren vorteilhaften Weiterbildung sind in dem erfindungsgemäßen Bussystem vor einem Beginn der Konfiguration des Bussystems das grundsätzliche Busprotokoll, der Buszugriff und der Informationsaustausch durch Senden und Empfangen der Komponenten in der Konfigurierungsphase, die grundlegenden Identifikationsdaten für jede Komponente sowie die von jeder Komponente verfügbaren Informationen festgelegt.

Die Konfiguration des Bussystems beginnt, indem mindestens eine Netzkomponente eine Anfrage (Request) an mindestens eine andere Netzkomponente sendet. Eine anfordernde Netzkomponente benötigt während des Betriebs des Systems mindestens einmal eine Information, z.B. den Aktualwert einer physikalischen Größe, wie beispielsweise eine Temperatur, von einer besendeten, d.h. Information liefernden Netzkomponente. Der Request enthält Informationen über die Art der Bereitstellung und weitere Anforderungen.

Die mindestens eine besendete Netzkomponente sendet daraufhin eine Konfigurationsantwort (Acknowledge) als Empfangsquittung an die anfordernde Netzkomponente. Diese Konfigurationsantwort kann entweder eine Zusage (Acknowledge-Zusage) oder eine Absage (Acknowledge-Absage) sein und kann, insbesondere im Falle einer Zusage, zusätzliche Informationen über die Art der Bereitstellung der angeforderten Informationen auf dem Bus enthalten. Ist dies für beide Netzkomponenten zufriedenstellend verlaufen, wird durch diesen Vorgang ein Vertrag (Contract) geschlossen, d.h. die besendete Netzkomponente sendet die Information in der Betriebsphase in der angeforderten Weise. Ist das Ergebnis für die anfordernde Netzkomponente nicht zufriedenstellend, so wird von ihr ein Widerruf (Cancel) gesendet.

Im Falle einer Akzeptierung der Konfigurationsantwort durch die anfordernde Netzkomponente wird die durch die Akzeptierung zwischen den mindestens zwei Netzkomponenten vereinbarte Konfiguration abgespeichert.

Gemäß einer ersten vorteilhaften Weiterbildung des erfindungsgemäßen Verfahrens, werden die gerade geschilderten Verfahrensschritte so oft wiederholt, bis zwischen allen anfordernden Netzkomponenten und allen jeweils besendeten Netzkomponenten eine Akzeptierung oder Ablehnung einer Konfiguration erreicht wird. Dabei kann vorgesehen sein, dass eine anfordernde Netzkomponente gegebenenfalls ihre Konfigurationsanforderung ändert, z.B. die Auflösung einer Information, z.B. eines Aktualwertes, von 10bit auf 8bit senkt, um auf diese Weise doch noch eine Akzeptierung einer Konfigurationsantwort zu erreichen. Eine Absenkung von Anforderungen ist in der Regel jedoch nur soweit möglich, wie ein ordnungsgemäßer Betrieb des Systems in der Betriebsphase noch gewährleistet ist.

Gemäß einer weiteren vorteilhaften Weiterbildung des erfindungsgemäßen Verfahrens startet die automatische Selbstkonfigurierung nach einem Startsignal einer Starteinrichtung. Dies hat den Vorteil, dass z.B. sichergestellt werden kann, dass die Selbstkonfiguration erst beginnt, wenn ein für das System sicherer Zustand besteht und eine Signalkombination gegeben wird, die mit großer Sicherheit nicht zufällig im System vorkommt. Dies kann z.B. durch eine mehrfache Wiederholung einer Abfrage oder eine Befehlskombination sichergestellt werden.

Weiterhin ist als vorteilhafte Weiterbildung des erfindungsgemäßen Verfahrens vorgesehen, dass vor dem Beginn des Konfigurierens das grundsätzliche Busprotokoll, der Buszugriff und der Informationsaustausch durch Senden und Empfangen der Netzkomponenten in der Konfigurierungsphase, die grundlegenden Identifikationsdaten für jede Netzkomponente sowie die von jeder Netzkomponente verfügbaren Informationen festgelegt werden.

Insbesondere wenn, wie dies in der Praxis häufiger vorkommen wird, mehr als eine anfordernde Netzkomponente von einer bestimmten besendeten Netzkomponente Informationen benötigt, werden nach dem erfindungsgemäßen Verfahren mehrere anfordernde Netzkomponenten Anfragen an eine besendete Netzkomponente senden. In dieser Konstellation kann es vorkommen, dass die besendete Netzkomponente auf alle Anfragen von anfordernden Netzkomponenten im Betriebszustand die jeweils ursprünglich angeforderten Informationen senden kann. Wenn die besendete Netzkomponente dazu jedoch nicht in der Lage ist, oder wenn es aus Gründen einer möglichst niedrigen Buslast notwendig oder gewünscht ist, dass die besendete Netzkomponente nur eine geringere Menge an Informationen über den Bus sendet, ist es vorteilhaft, wenn die besendete Netzkomponente die mit mindestens einer anfordernden Netzkomponente vereinbarte Konfiguration zu einer neuen Konfiguration verarbeitet, wie dies gemäß einer weiteren Weiterbildung des erfindungsgemäßen Verfahrens vorgesehen ist.

Damit die mindestens eine anfordernde Netzkomponente in dieser Ausführungsform des erfindungsgemäßen Verfahrens erkennen kann, ob die von der mindestens einen besendeten Netzkomponente neu erzeugte Konfiguration für sie im Betriebszustand ausreichende Daten bzw. Informationen zur Verfügung stellt, sendet die mindestens eine besendete Netzkomponente die neue Konfiguration über den Bus, wie dies gemäß einer weiteren vorteilhaften Weiterbildung der Erfindung vorgesehen ist. Die mindestens eine anfordernde Netzkomponente kann nun die neue Konfiguration akzeptieren oder ablehnen. Auch ist es hier möglich, dass die anfordernde Netzkomponente ihre Anforderung an die neue Konfiguration anpasst, sofern sie mit den Informationen gemäß der neuen Konfiguration in der Betriebsphase ordnungsgemäß betrieben werden kann, um so eine Akzeptierung der neuen Konfiguration zu erreichen.

Wird die neue Konfiguration von allen anfordernden Netzkomponenten akzeptiert, wird die neue Konfiguration gespeichert, wie dies gemäß einer weiteren vorteilhaften Weiterbildung der Erfindung vorgesehen ist.

Ist die erfindungsgemäße Selbstkonfigurierung eines Bussystems so weit fortgeschritten, ist es weiter vorteilhaft, wenn die mindestens eine anfordernde Netzkomponente und/oder die mindestens eine besendete Netzkomponente ihren jeweiligen Konfigurationsstatus an die Starteinrichtung sendet. Der an die Starteinrichtung gesendete Konfigurationsstatus enthält Informationen über eine ordnungsgemäße oder nicht ordnungsgemäße Konfiguration der jeweiligen Netzkomponente.

Schließlich ist es vorteilhaft, wenn vorgesehen ist, dass sich eine Netzkomponente nicht in den Betriebszustand versetzt, wenn bei ihr keine ordnungsgemäße Konfiguration erreicht werden konnte.

Besonders vorteilhaft ist, wenn das erfindungsgemäße Bussystem in einem Kraftfahrzeug, wie beispielsweise in einem Personenkraftwagen, einem Flugzeug, einem Motorschiff oder auch in einem Raumfahrzeug zum Einsatz kommt.

Im nachfolgenden werden exemplarisch noch einmal die Vorteile der Erfindung im Bereich des Fahrzeugbaus dargelegt und ein praktisches Beispiel des Ablaufs einer erfindungsgemäßen automatisierten Buskonfiguration dargestellt:

Im Fahrzeugbau wird die Festlegung für die Bussysteme nach dem Stand der Technik in der Konstruktionsphase getroffen. Aus diesem Grunde sind Änderungen in einer späteren Phase der Konstruktion oder gar nachträglich im Kundendienst nicht oder nur schwer und eingeschränkt möglich. Hieraus resultiert eine große Inflexibilität, die insbesondere bei deterministischen Busprotokollen noch verstärkt wird. Dies erschwert oder verhindert gar Nachrüstungen, die nicht von vornherein in der Konstruktion bedacht wurden.

Die Vielfalt an möglichen Varianten würde nochmals erhöht, würde man bereits, wie es eigentlich sinnvoller wäre, je nach Verbauzustand verschiedene bzw. modifizierte Protokolle verwenden. Auch wird derzeit an sog. "vagabundierende" Funktionen gedacht, um die im Fahrzeug verteilten Ressourcen an Rechenleistung, Speicher, usw. besser ausnutzen zu können. Diese "vagabundierenden" Funktionen würden in unterschiedlichen Komponenten ausgeführt. Hierzu ist es sinnvoll und notwendig, dass die Schnittstellen im Fahrzeug flexibel angepasst werden können. Dies ist mit den bisher bei Bussystemen zur Verfügung stehenden Funktionen nicht möglich.

Durch die erfindungsgemäße fahrzeugindividuelle Busfestlegung und die Einführung einer Konfigurierungsphase vor Erstinbetriebnahme bzw. Wiederinbetriebnahme nach Eingriff in die Buskonfiguration (z.B. nach Wechsel bzw. Ergänzung einer Komponente) werden die Nachteile des Stands der Technik überwunden.

Wenn erfindungsgemäß vorteilhafterweise in der Konstruktionsphase nur noch das grundsätzliche Busprotokoll, die Festlegungen für den Buszugriff/Informationsaustausch in der Konfigurierungsphase, die grundlegende Festlegung für jede Komponente (z.B. Component Identifier) und die darin verfügbaren Informationen (z.B. Information Identifier) festgelegt werden, brauchen die Bestandteile des Protokoll sowie die genaue Festlegung erst in einer späteren Konfigurierungsphase angepasst werden.

Abgesehen von diesen Anpassungen findet der Ablauf während des Betriebs wie heute nach dem Stand der Technik statt. Die Konfigurierungsphase dient gewissermaßen dazu, den Abstimmungsprozess, der heute im Unternehmen geführt wird, fahrzeugindividuell und automatisiert durchzuführen. Je nachdem, ob die Konfigurierung nur bei Erstinbetriebnahme in der Produktion oder nachher auch im Kundendienst erfolgen soll, kann sie "off board", z.B. in einem Personalcomputer ablaufen, wobei das Ergebnis als Konfiguration z.B. per Bandendeprogrammierung/-codierung in die Steuergeräte übertragen wird, oder "on board" direkt im Fahrzeug abläuft. Das Ergebnis ist jeweils die komplette Festlegung des Busprotokolls für dieses Fahrzeug.

Im Nachfolgenden wird als ein Beispiel eine der möglichen Abläufe einer erfindungsgemäßen automatisierten Buskonfigurationen dargestellt:
1. Start:
   Die Startphase besteht ihrerseits aus einer Aufforderung zum Start (Start Request), einer Rückbestätigung durch die verbauten Steuergeräte (Start Acknowledge) und dem eigentlichen Startsignal (Start) durch die Starteinrichtung.
   Die Startphase für die Konfiguration darf nur beginnen, wenn einerseits ein sicherer Fahrzeugzustand besteht (z.B. Geschwindigkeit gleich Null, keine Motordrehzahl) und andererseits eine Signalkombination gegeben wird, die mit großer Sicherheit nicht zufällig im Fahrzeug gegeben wird (mehrfache Wiederholung bzw. Befehlskombination).
   Die Kontrolle einer Rückbestätigung durch alle Netzkomponenten erfüllt einerseits den Zweck einer Verbaukontrolle und der Sicherstellung eines ordnungsgemäßen Busanschlusses einer jeden Netzkomponente.
   Die genaue Spezifikation ist abhängig vom verwendeten Bussystem.
2. Request Information:
   Unmittelbar nach dem Signal "Start" befinden sich die Steuergeräte in der Phase "Request Information". Gesendet wird nach einem "default Busprotokoll", dass ähnlich dem nachher verwendeten ist, jedoch in einer Standardkonfiguration, in der Timingparameter eher unwichtig sind. Die Buszugriffe der Steuergeräte bestehen mindestens aus den Bestandteilen:
   - Identifikation der anfordernden Netzkomponente (generelle Festlegung; vgl. P-Codes)
   - Identifikation der besendeten Netzkomponente (generelle Festlegung; vgl. P-Codes)
   - Benötigter Wert (generelle Festlegung gültig für einen Netzkomponententyp, z.B. ein Getriebesteuergerät; Fehlercodes, z.B. spezielle ID für "momentenerhöhenden Eingriff")
   - Benötigte Auflösung der Information (z.B. 10bit, 8bit)
   - Zeitraster, in dem die Information im Betrieb benötigt wird (z.B. einmalig, 10ms, 20ms)
   - Betriebsphase, für die die Festlegung gilt (z.B. Nachlauf, Betrieb, Zündung ein ohne Motorlauf)
   - 2 Bits für Unterscheidung "Request", "Cancel" "Acknowledge-Zusage (Contract)", "Acknowledge-Absage"

   Jede Netzkomponente, die eine Information von einer anderen benötigt, sendet eine Anfrage (Request) ab. Hierin wird die Information, die Art der Bereitstellung und weitere Anforderungen spezifiziert. Die besendete Netzkomponente gibt als Empfangsquittung eine Zusage (Acknowledge-Zusage) oder Absage (Acknowledge-Absage) sowie zusätzliche Informationen über die Art der Bereitstellung der angeforderten Informationen auf dem Bus zurück. Ist dies für beide Netzkomponenten zufriedenstellend verlaufen, wird durch diesen Vorgang ein Vertrag (Contract) geschlossen, d.h. die besendete Komponente sendet die Information in der Betriebsphase in der angeforderten Weise.
   Ist das Ergebnis für die anfordernde Komponente nicht zufriedenstellend, so wird von ihr ein Widerruf (Cancel) gesendet und wieder eine Bestätigung der besendeten Netzkomponente abgewartet. Sie wendet sich dann an die nächste zu besendende Netzkomponente. Diese Phase dauert so lange an, bis für eine für alle Netzkomponenten allgemein festgelegte Zeitdauer kein Request, Acknowledge und/oder Cancel und mehr gesendet werden und Busruhe eintritt.
3. Publish:
   Jede besendete Netzkomponente sammelt die Anfragen, verarbeitet sie zu einer neuen Konfiguration, indem sie für den eigenen Sendebetrieb festsetzt, in welcher Weise die Informationen auf den Bus gelegt werden. Daraufhin wird diese neue Konfiguration allen anderen Netzkomponenten auf dem Bus bekannt gemacht (Publish).
   Ein Publish-Zugriff entspricht den Zugriffen in der Requestphase, allerdings ohne die Informationen
   - ID des angefragten Steuergeräts und
   - Bits für "Request" / "Cancel"
   Hinzu kommen Informationen über die Position im Zeitraster (z.B. bei deterministischen Busprotokollen, wie beispielsweise dem TTP-Busprotokoll) bzw. über die Botschaft (z.B. bei ereignisgesteuerten Busprotokollen, wie beispielsweise dem CAN-Busprotokoll).
   Die Netzkomponenten, die diese Information nützen, antworten wieder mit einer Bestätigung (Acknowledge), sofern sie die neue Konfiguration akzeptieren. Wenn, wie dies vorgesehen sein kann, in den besendeten Netzkomponenten eine interne Liste der anfordernden Netzkomponenten vorliegt, können die besendeten Netzkomponenten selbst feststellen, ob alle die Information anfordernden Netzkomponenten die Nachricht über die neue Konfiguration erhalten und akzeptiert haben. Erst wenn dies für alle Sende-Empfangsbeziehungen bestätigt werden kann, ist diese Phase fehlerfrei abgeschlossen. Die erzielte Konfiguration wird abgespeichert, vorteilhafterweise in jeder besendeten Netzkomponente die Konfiguration, die für die jeweilige besendete Netzkomponente benötigt wird. Je nach Bedarf und zur Verfügung stehender Information können einzelne Softwaremodule (de-)aktiviert werden.
   Die publizierten Ergebnisse müssen nicht unbedingt mit den Anfragen identisch sein. Beispielsweise ist es einer besendeten Netzkomponente möglich, mehrere Anfragen zusammenzufassen und nur die Informationen mit dem höchsten Anspruch (z.B. Auflösung, Zeitraster) zu senden. Die anfordernden Netzkomponenten können nun prüfen, ob sie mit den gesendeten Informationen betrieben werden können und sich entsprechend konfigurieren.
4. Testing (bei Bedarf): Bei Bedarf schließt sich eine Testphase an, bei der jede Netzkomponente entsprechend des späteren Betriebs auf den Bus zugreift. Auch hier wird für jede Sende-/Empfangsbeziehung von der anfordernden Komponente ein Acknowledge zu der besendeten Netzkomponente gesendet, das den (Miss-)Erfolg des Tests zurückmeldet.
   Für jede Betriebsphase kann ein allgemeiner Testdurchlauf mit definierten Daten gestartet werden. Hiermit kann überprüft werden, ob die Buslast zulässig ist und ob alle Informationen einwandfrei übertragen werden.
5. Confirmation:
   Sind alle Phasen einwandfrei durchlaufen, sendet jede Netzkomponente eine Bestätigung über die ordnungsgemäße Konfiguration (Confirm) bzw. eine entsprechende Fehlermeldung (Fail) an die Starteinrichtung (z.B. ein Tester), die ursprünglich das Startsignal gegeben hat. Eine Netzkomponente, deren Zustand nicht "Confirmed Configuration" ist, darf sich nicht in den Betriebszustand versetzen. Empfängt sie Botschaften aus der Betriebsphase, muss sie ihren Sendebetrieb einstellen.
   Eine Failmeldung enthält alle Informationen, um den Fehler nachvollziehen zu können (z.B. mit Hilfe einer Fahrzeugdiagnosefunktion).

Tritt in einer der Konfigurierungsphasen ein Fehler auf oder werden die Bedingungen im Fahrzeug für die Konfigurierung verletzt (z.B. durch einen Motorstart), so ist über Statusbits und die in jeder Netzkomponente abgelegten Informationen die Fehlerursache nachvollziehbar. Die Netzkomponenten verhalten sich dann wie vor Beginn des Startsignals für die Konfigurierung.

Der Konfigurierungsvorgang kann "off board" (z.B. auf einem Personalcomputer) prinzipiell genauso ablaufen, wie "on board" (d.h. im Kraftfahrzeug). Bei der "off board"-Konfigurierung sind jedoch oftmals mehr deterministische Festlegungen oder andere Organisationsmechanismen möglich. Auch kann der Informationsaustausch durch die nicht mehr erforderliche Regelung der Buszugriffe vereinfacht sein. Insgesamt können so die Freiheiten für die Konfigurierungsmechanismen bei der "off board"-Konfigurierung erhöht sein.

Die Erfindung stellt zusammengefasst somit unter anderem folgende Vorteile zur Verfügung:
- Einfache Implementierung vernetzter Funktionen im Fahrzeug;
- Reduzierung der Buslast bei unterschiedlichen Varianten einer Netzkomponente;
- Erleichterung der Konfigurierung der Fahrzeuge in Produktion und Kundendienst durch automatische Codierung;
- Höhere Flexibilität, z.B. Möglichkeit von einfachen Änderungen im Busprotokoll (z.B. CAN) selbst in später Konstruktionsphase und im Kundendienst, z.B. bei Nachrüstungen;
- Kein CAN-Variantenhandling in der technischen Entwicklung;
- Vorbereitung für "vagabundierende Funktionen"; da Schnittstellen gewissermaßen auf einem Marktplatz verhandelt werden, können auch Funktionen auf dieselbe Art mitverhandelt werden. Die automatische Buskonfiguration dient gewissermaßen als Vorbereitung dafür.

## Patentansprüche

1. Netzkomponente mit einer Anschlusseinrichtung an mindestens eine Busverbindungsleitung umfassend
eine Sendeeinrichtung zum Senden von Konfigurationsanfragen, -antworten, -daten und/oder Aktualdaten über mindestens eine Busverbindungsleitung sowie eine Empfangeinrichtung zum Empfangen von Konfigurationsanfragen, -antworten, -daten und/oder Aktualdaten von mindestens einer Busverbindungsleitung,
**dadurch gekennzeichnet, dass**
die Sendeeinrichtung dazu ausgelegt ist, eine Information über eine Art einer Bereitstellung der Aktualdaten auf der Busverbindungsleitung zu senden und/oder
die Empfangeinrichtung dazu ausgelegt ist, eine Information über die Art der Bereitstellung der Aktualdaten auf der Busverbindungsleitung zu empfangen und auszuwerten.

2. Netzkomponente nach Anspruch 1, **gekennzeichnet durch**
eine interne oder externe Speichereinrichtung zum Abspeichern von Konfigurationsdaten.

3. Bussystem mit mindestens zwei Netzkomponenten nach Anspruch 1 oder 2 und mindestens einer Busverbindungsleitung, über die die Netzkomponenten miteinander verbunden sind.

4. Bussystem nach Anspruch 3, **dadurch gekennzeichnet, dass** es weiter eine Starteinrichtung enthält, welche dazu ausgelegt ist, ein Startsignal an die mindestens zwei Netzkomponenten auszugeben, wobei die mindestens zwei Netzkomponenten dazu ausgelegt sind, nach einem Empfang des Startsignals die Konfiguration des Bussystems über die mindestens eine Busverbindungsleitung zu beginnen.

5. Bussystem nach einem der Ansprüche 3 oder 4, **dadurch gekennzeichnet, dass** vor einem Beginn der Konfiguration des Bussystems das grundsätzliche Busprotokoll, der Buszugriff und der Informationsaustausch durch Senden und Empfangen der Komponenten in der Konfigurierungsphase, die grundlegenden Identifikationsdaten für jede Komponente sowie die von jeder Komponente verfügbaren Informationen festgelegt sind.

6. Verfahren zum automatischen Konfigurieren eines Bussystems mit mindestens zwei Netzkomponenten, welche über eine Busverbindungsleitung miteinander verbunden sind,
**gekennzeichnet durch** die Schritte, dass
mindestens eine Netzkomponente eine Anfrage bezüglich einer Art einer Bereitstellung von Aktualdaten auf der Busverbindungsleitung an mindestens eine andere Netzkomponente sendet, und
die mindestens eine besendete Netzkomponente eine Konfigurationsantwort mit einer Information über die Art der Bereitstellung der Aktualdaten auf der Busverbindungsleitung an die anfordernde Netzkomponente sendet.

7. Verfahren nach Anspruch 6, **dadurch gekennzeichnet, dass**
die Verfahrensschritte nach Anspruch 6 so oft wiederholt werden, bis zwischen allen anfordernden Netzkomponenten und allen jeweils besendeten Netzkomponenten eine Akzeptierung oder Ablehnung von Konfigurationen, gegebenenfalls unter Änderung von Konfigurationsanforderungen, erreicht wird.

8. Verfahren nach Anspruch 6 oder 7, **dadurch gekennzeichnet, dass**
das Konfigurieren nach dem Senden von mindestens einem Startsignal an mindestens eine Netzkomponente beginnt.

9. Verfahren nach einem der Ansprüche 6 bis 8, **dadurch gekennzeichnet, dass**
vor dem Beginn des Konfigurierens das grundsätzliche Busprotokoll, der Buszugriff und der Informationsaustausch durch Senden und Empfangen der Netzkomponenten in der Konfigurierungsphase, die grundlegenden Identifikationsdaten für jede Netzkomponente sowie die von jeder Netzkomponente verfügbaren Informationen festgelegt werden.

10. Verfahren nach einem der Ansprüche 6 bis 9, **dadurch gekennzeichnet, dass**
die mindestens eine besendete Netzkomponente die mit mindestens einer anfordernden Netzkomponente vereinbarte Konfiguration zu einer neuen Konfiguration verarbeitet.

11. Verfahren nach Anspruch 10, **dadurch gekennzeichnet, dass** die mindestens eine besendete Netzkomponente die neue Konfiguration über die mindestens eine Busverbindungsleitung sendet.

12. Verfahren nach Anspruch 11, **dadurch gekennzeichnet, dass** die mindestens eine bei der besendeten Netzkomponente anfordernde Netzkomponente die neue Konfiguration akzeptiert oder ablehnt.

13. Verfahren nach Anspruch 12, **dadurch gekennzeichnet, dass** die zwischen einer besendeten Netzkomponente und mindestens einer anfordernden Netzkomponente akzeptierte neue Konfiguration gespeichert wird.

14. Verfahren nach einem der Ansprüche 6 bis 13, **dadurch gekennzeichnet, dass** die mindestens eine anfordernde Netzkomponente und/oder die mindestens eine besendete Netzkomponente ihren jeweiligen Konfigurationsstatus an die Starteinrichtung senden.

15. Verfahren nach Anspruch 14, **dadurch gekennzeichnet, dass** der an die Starteinrichtung gesendete Konfigurationsstatus Informationen über eine ordnungsgemäße oder nicht ordnungsgemäße Konfiguration enthalten.

16. Verfahren nach einem der Ansprüche 6 bis 15, **dadurch gekennzeichnet, dass** eine Netzkomponente sich bei nicht ordnungsgemäßer Konfiguration nicht in den Betriebszustand versetzt.

17. Kraftfahrzeug mit einem Bussystem nach einem der Ansprüche 3 bis 5.

## Claims

1. Network component with a connection device to at least one bus connection lead comprising
a transmission device for the sending of configuration enquiries, answers, data and/or current data via at least one bus connection lead and also a reception device for the receiving of configuration enquiries, answers, data and/or current data from at least one bus connection lead,
**characterised by** the fact that
the transmission device is designed to send a piece of information about a type of a preparation of the current data on the bus connection lead and/or the reception device is designed to receive and evaluate a piece of information about a type of a preparation of the current data on the bus connection lead.

2. Network component according to claim 1, **characterised by** an internal or external memory device for the storage of configuration data.

3. Bus system with at least two network components according to claim 1 or 2 and at least one bus connection lead via which the network components are connected with each other.

4. Bus system according to claim 3, **characterised by** the fact that it further contains a starting device, which is designed to give out a starting signal to the at least two network components, with the at least two network components being designed, after reception of the starting signal, to begin the configuration of the bus system via the at least one bus connection lead

5. Bus system according to the claim 3 or 4, **characterised by** the fact that before a beginning of the configuration of the bus system the basic bus protocol, the bus access and the exchange of information by sending and receiving of the components in the configuration phase, the basic identification data for each component and also the information available from each component are established.

6. Procedure for the automatic configuration of a bus system with at least two network components, which are connected with each other via a bus connection lead,
**characterised by** the steps that at least one network component sends an enquiry concerning a type of preparation of current data on the bus connection lead to at least one other network component, and
the at least one contacted network component sends a configuration answer with information about the type of preparation of the current data on the bus connection lead to the requesting network component.

7. Procedure according to claim 6, **characterised by** the fact that the procedure steps according to claim 6 are repeated as often until between all requesting network components and all at each time contacted network components an acceptance or refusal of configurations is obtained, if necessary with a change of configuration requests.

8. Procedure according to claim 6 or 7, **characterised by** the fact that the configurating begins after the sending of at least one starting signal to at least one network component.

9. Procedure according to one of the claims 6 to 8, **characterised by** the fact that before the beginning of the configuration the basic bus protocol, the bus access and the exchange of information by sending and receiving of the components in the configuration phase, the basic identification data for each network component and also the information available from each network component are established.

10. Procedure according to one of claims 6 to 9, **characterised by** the fact that
the at least one contacted network component processes the configuration agreed with at least one requesting network component to a new configuration.

11. Procedure according to claim 10, **characterised by** the fact that the at least one contacted network component sends the new configuration via the at least one bus connection lead.

12. Procedure according to claim 11, **characterised by** the fact that the at least one network component requesting from the contacted network component accepts or rejects the new configuration.

13. Procedure according to claim 12, **characterised by** the fact that the new configuration accepted between a contacted network component and at least one requesting network component is stored.

14. Procedure according to one of the claims 6 to 13, **characterised by** the fact that the at least one requesting network component and/or the at least one contacted network component send their configuration status at any time to the starting device.

15. Procedure according to claim 14, **characterised by** the fact that the configuration status sent to the starting device contains information about a configuration which is in order or not in order.

16. Procedure according to one of the claims 6 to 15, **characterised by** the fact that a network component cannot move into the operational state with a configuration that is not in order.

17. Motor vehicle with as bus system according to one of the claims 3 to 5.

## Revendications

1. Composant de réseau avec un dispositif de raccordement à au moins une ligne de liaison de bus comprenant
un dispositif d'émission pour envoyer des questions, des réponses, des données concernant la configuration et / ou des données actuelles sur au moins une ligne de liaison de bus ainsi qu'un dispositif de réception pour réceptionner les questions, les réponses, les données concernant la configuration et / ou les données actuelles d'au moins une ligne de liaison de bus.
**caractérisé en ce que**
le dispositif d'émission est conçu pour émettre une information sur le genre d'une mise à disposition des données actuelles sur la ligne de liaison de bus et / ou
le dispositif de réception est conçu pour recevoir et évaluer une information sur le genre d'une mise à disposition des données actuelles sur la ligne de liaison de bus.

2. Composant de réseau selon la revendication 1, **caractérisé par** un dispositif de mémorisation interne ou externe pour la mémorisation des données de configuration

3. Système de bus avec au moins deux composants de réseau selon la revendication 1 ou 2 et avec au moins un ligne de liaison de bus via laquelle les composants de réseau sont reliés ensemble.

4. Système de bus selon la revendication 3, **caractérisé en ce qu'**il contient en outre un dispositif de démarrage, qui est conçu pour émettre un signal de départ à au moins deux composants de réseau, les composants de réseau au moins au nombre de deux étant conçus pour démarrer la configuration du système de bus via au moins une ligne de liaison de bus suite à une réception du signal de départ.

5. Système de bus selon l'une des revendications 3 ou 4, **caractérisé en ce qu'**avant le début de la configuration du système de bus le protocole de bus principal, l'accès au bus et l'échange d'informations via l'émission et la réception des composants dans la phase de configuration, les données d'identification de base pour chaque composant ainsi que les informations disponibles auprès chaque composant sont définis.

6. Processus de configuration automatique d'un système de bus avec au moins deux composants de réseau, lesdits composants étant reliés ensemble via une ligne de liaison de bus,
**caractérisé par** les étapes d'après lesquelles
au moins un composant de réseau envoie une demande concernant un genre de mise à disposition des données actuelles sur la ligne de liaison de bus à au moins un autre composant de réseau, et
qu'au moins un composant de réseau fournisseur envoie au composant de réseau demandeur une réponse de configuration avec une information sur le genre de la mise à disposition des données actuelles sur la ligne de liaison de bus.

7. Processus selon la revendication 6, **caractérisé en ce que** les étapes du processus selon la revendication 6 sont réitérées autant de fois que nécessaire, jusqu'à ce qu'il y ait une acceptation ou un refus des configurations, le cas échéant sous modification des exigences de configuration, entre tous les composants de réseau demandeurs et tous les composants de réseau fournisseurs respectifs.

8. Processus selon la revendication 6 ou 7, **caractérisé en ce que** la configuration commence après l'émission d'au moins un signal de départ vers au moins un composant de réseau.

9. Processus selon l'une des revendications 6 à 8, **caractérisé en ce qu'**avant le début de la configuration, le protocole de bus principal, l'accès au bus et l'échange d'informations via l'émission et la réception des composants dans la phase de configuration, les données d'identification de base pour chaque composant de réseau ainsi que les informations disponibles à partir de chaque composant sont définis.

10. Processus selon l'une des revendications 6 à 9, **caractérisé en ce qu'**au moins un composant de réseau fournisseur transforme la configuration convenue en une nouvelle configuration avec au moins un composant de réseau requis.

11. Processus selon la revendication 10, **caractérisé en ce qu'**au moins un composant de réseau fournisseur envoie la nouvelle configuration via au moins une ligne de liaison de bus.

12. Processus selon la revendication 11, **caractérisé en ce qu'**au moins un composant de réseau requis par le composant de réseau fournisseur accepte ou refuse la nouvelle configuration.

13. Processus selon la revendication 12, **caractérisé en ce que** la nouvelle configuration acceptée entre un composant de réseau fournisseur et au moins un composant de réseau demandeur est mémorisée.

14. Processus selon l'une des revendications 6 à 13, **caractérisé en ce qu'**au moins un composant de réseau demandeur et / ou au moins un composant de réseau fournisseur envoient leur statut respectif de configuration au dispositif de démarrage.

15. Processus selon la revendication 14, **caractérisé en ce que** le statut de configuration envoyé au dispositif de démarrage contient des informations sur une configuration conforme ou non conforme.

16. Processus selon l'une des revendications 6 à 15, **caractérisé en ce qu'**un composant de réseau ne se met pas en état de fonctionnement en cas de configuration non conforme.

17. Véhicule automobile avec un système de bus selon l'une des revendications 3 à 5.
